# EUROPEAN PATENT APPLICATION

(11) **EP 0 546 835 A2**
(43) Date of publication of application: **16.06.1993**
(21) Application number: 92311304.7
(22) Date of filing: 10.12.1992
(51) Int. Cl.: G06F 15/80

(54) **Neural network apparatus and method**

(30) Priority: 12.12.1991 US 805745
(71) Applicant: NCR International, Inc., Dayton, Ohio 45479 (US)
(72) Inventor: Feldgajer, Oleg, Waterloo, Ontario N2V 1G2 (CA)
(74) Representative: Robinson, Robert George

(57) **Abstract**

An apparatus and method are disclosed for determining a confidence level for a plurality of neural network output states (data values). The apparatus includes a memory (13,15) (including a stored program) for storing the data values, and a processor (17) for determining the highest and next highest data values, and a ratio of the highest and next highest data values. The ratio represents a confidence level or degree of confidence in accuracy of classification of the data values. The method employed by the apparatus includes the steps of calculating said ratio and applying it to the neural network output data values for rejecting or accepting said data values as correct. This method reduces errors in rejection of correct data values and in acceptance of incorrect data values.

## Description

This invention relates to neural networks.

One field of application for neural networks is in the classification (recognition) of character patterns, see for example the article "Pattern Classification Using Neural Networks" by R P Lippmann, IEEE Communications Magazine, November 1989, pages 47-64.

A neural network is a highly parallel dynamic array capable of processing information in terms of state responses to various applied inputs (initial or continuous inputs). The structure or topology of a neural network consists generally of a plurality of processing elements (neurons) that are interconnected via different information channels called interconnects. Each processing element can receive multiple input signals and produce one output signal. A neural network is fully described by specifying the processing element, the network topology, and a learning model.

The goal of the network as a pattern classifier is to assign input patterns (static input vectors x, containing n elements denoted x1, x2 , ....,xn) to one of a finite number, M, of classes of patterns (e.g., to one character of a set or class of characters, or to one class of a multitude of classes of characters), and to identify the class which best represents an input pattern (an often difficult task when the input patterns are corrupted by noise or other processes). When the classification is complete, generally only the output corresponding to the most likely class will be strongly indicated; the other outputs will often be weakly indicated.

During classification, errors (misreads) may occur. To correct such errors, some systems accumulate confidence ratings of the output states of various nodes of the network. The confidence ratings are expressed relative to a predetermined threshold level. One such system is described, for example, in U.S. Patent No. 4,599,693.

It is an object of the present invention to provide a system and method for determining confidence levels for neural networks, wherein the occurrence of errors is reduced.

Therefore, according to one aspect of the present invention, there is provided a system for determining a confidence level for a plurality of neural network output data values, characterized by: memory means, including a stored program, for storing the neural network output data values and processing means coupled to said memory means, for determining, under control of the stored program, the highest neural network output data value, the next highest neural network output data value, and the ratio of said highest neural network output data value to said next highest neural network output data value, said ratio representing a confidence level for classification of the neural network output data values, and for applying said ratio to neural network output data values for rejecting or accepting said data values as correct, thereby reducing errors in rejection of correct data values and in acceptance of incorrect data values.

According to another aspect of the present invention, there is provided a method of determining a confidence level for a plurality of neural network output data values, characterized by the steps of: storing the neural network output data values in a memory; determining the highest of the neural network output data values; determining the next highest of the neural network output data values; determining a ratio of the highest neural network output data value to the next highest neural network output data value, the ratio representing a confidence level for classification of the neural network output data values; and applying the ratio to neural network output data values for rejecting or accepting said data values as correct, thereby reducing errors in rejection of correct data values and in acceptance of incorrect data values.

One embodiment of the present invention will now be described by way of example, with reference to the accompanying drwings, in which:-
Figure 1 is a block diagram showing the system of the present invention;
Figure 2 is a graphic illustration of a neural network employed in pattern classification (recognition) by the system of Figure 1;
Figure 3 is a scatter diagram showing a distribution of neural network output values relative to predetermined threshold values and selected ratios (ratios of selected output values), the output values produced during a selected (third) input data processing operation (pass);
Figure 4 is a scatter diagram showing a distribution of neural network output values relative to predetermined threshold values and selected ratios, the output values produced during an eighteenth pass;
Figure 5 is a scatter diagram showing a distribution of neural output values, and areas of high (strong) and low (weak) confidence in accuracy of the output values; and
Figure 6 is a flow chart showing the application of strong (high) and weak (low) confidence levels in the confirmation of correctly read data and the rejection of misread data.

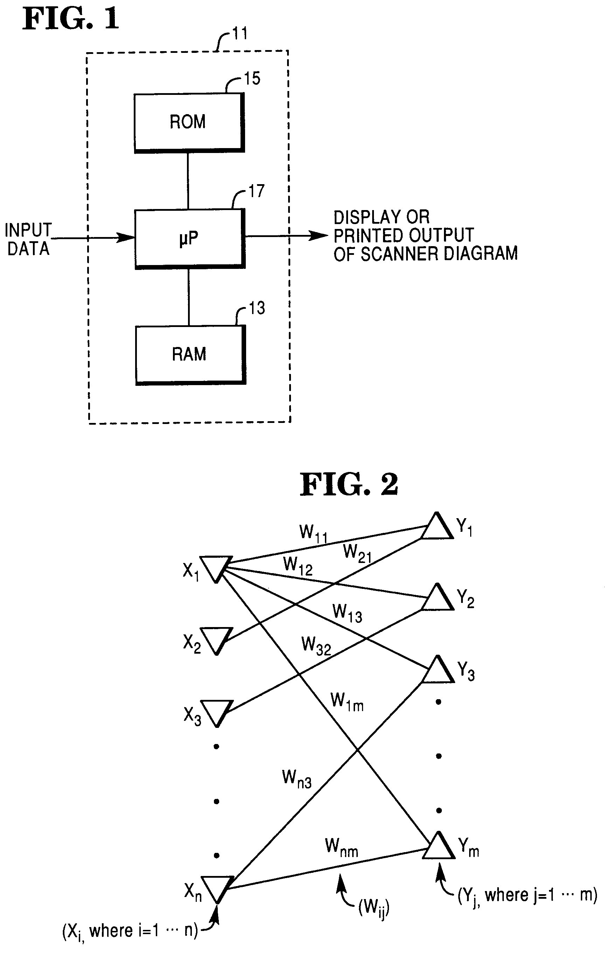

Figure 1 shows a system 11 of the present invention. The system includes a random access memory (RAM) 13 for storing input (applied) data, a read only-memory (ROM) 15 with a stored program, and a processor 17 operating under control of the stored program for processing the input data and producing confidence-level data.

Figure 2 shows an example of a neural network configuration. An associated neural network computation is shown by equation (1) below. In preparing to perform a neural net computation, the system 11 (Figure 1), upon receipt of weight data (Wᵢⱼ) (for example, weight data from a host computer), develops (builds) a table of the weight data in memory 13 in a predetermined sequence (as shown in Table I below) suitable for sequential access subsequently. The table may be represented as an array of weight values (e.g., a 512 x 512 matrix of memory locations/addresses).

**TABLE I**

| (Wi,j) | | | | | | | | | |
|---|---|---|---|---|---|---|---|---|---|
| W_{1,1} | W_{1,2} | W_{1,3} | W_{1,4} | W_{1.5} | W_{1,6} | W_{1,7} | W_{1,8} | W_{1,9} | W_{1,10} |
| W_{2,1} | W_{2,2} | . | . | . | . | . | . | . | W_{2,10} |
| . | . | . | . | . | . | . | . | . | . |
| . | . | . | . | . | . | . | . | . | . |
| W_{5,1} | W_{5,2} | . . | . | . | . | . | . | . | W_{5,10} |

The table represents a stored data sequence useful in performing n x m computations, where n represents the number (e.g., 100) of inputs (columns), and m represents the number (e.g., 5) of outputs (rows)

After the weight values (Wij) are stored in the memory 13, the input values or static input vector (Xᵢ)are stored locally in the processor 17. The processor 17 then performs the multiply-accumulate operation shown in equation (1) below to produce each neural network output data value (Yⱼ): 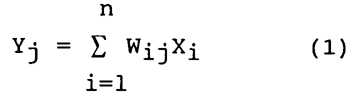
The output value Yₗ may then be adjusted to ensure that it falls within a predefined range of values or meets a predefined threshold. When so adjusted, the adjusted value (Yₗ) may be expressed as a function of Yⱼ as follows: 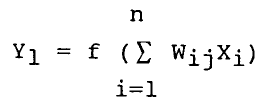
It is common practice, when neural networks are used in the classification of patterns, to limit or bound the possible output values to a range of 0.1 - 0.9. The output values of the nodes may represent the extent or degree of recognition/classification of a character, or of a class (type) of characters such as Courier type characters or Helvetica type characters. The output value 0.9 represents the best match of the input pattern to a class, and the value 0.1 represents the worst match of the input pattern to the class. Generally, only one output unit (node) produces an output value at or near the highest output value (0.9). All of the remaining output units generally produce output values at or near the lowest output value (0.1).

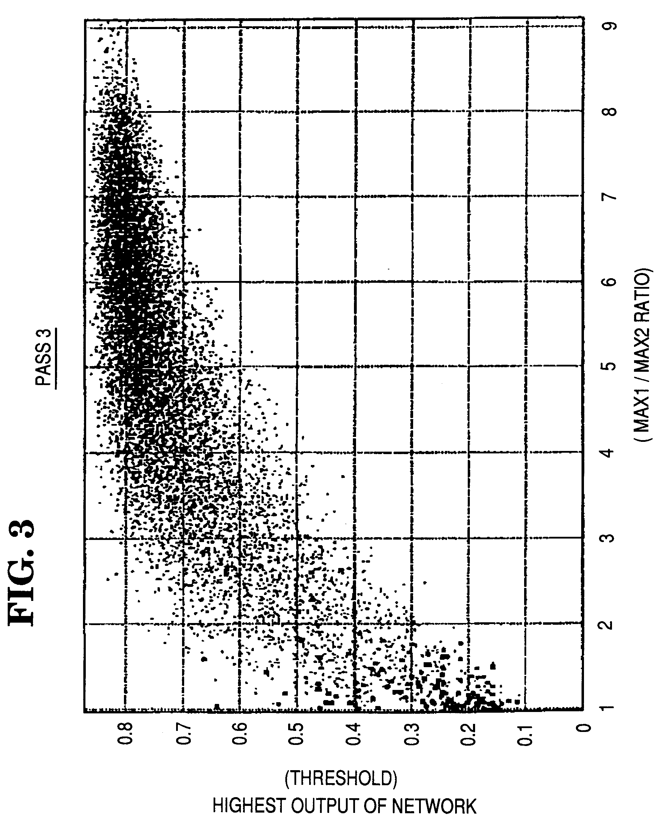

A distribution of output values (represented as points relative to a selected/predetermined threshold) is shown in Figure 3. As the neural network learns from various new applied data patterns, the magnitude of the output value increases with training. The number of points in the graph corresponds to the number of applied input patterns (values). Each point represents the highest output value from the neural network (i.e., the output of the highest-output node of the network). Successful recognitions (classifications) are represented as dots and misreads are represented as small rectangles.

Over and above the production of output values, the neural-network-based system of the present invention provides a confidence factor (level) representing the degree of confidence in the accuracy of the various classifications. The confidence level for a classification is expressed as a ratio of the highest output value to the second highest output value. For example, if the highest output value is 0.9 and the next highest is 0.1, the highest confidence level attained would be 9 (i.e., 0.9/0.1 or 100%). Also, if the highest output value is 0.9 and the next highest output value is 0.4, the highest confidence level attained would be 2.25 (i.e., 0.9/0.4 or 44%).

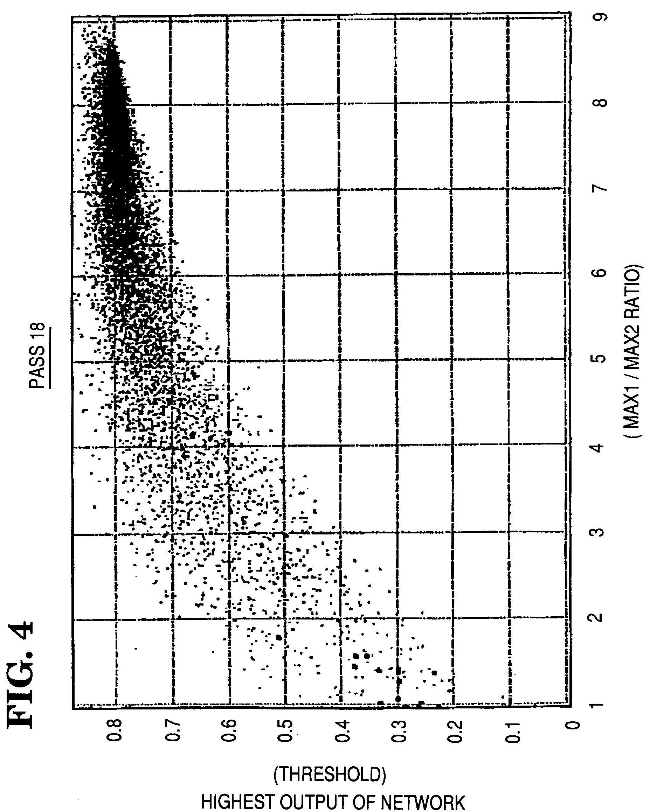

Figure 4 shows another distribution of node output values. An improvement in the highest output level (confidence level) is shown by this distribution in Figure 4, compared to the distribution in Figure 3. This improvement may be due to the learning/training of the neural network (as it progresses from pass to pass (e.g., from pass three to pass eighteen) when processing applied (input) data. In these Figures (Figures 3 and 4), output values from the highest output node are plotted against the vertical or highest-output axis, and the ratio of the highest output to next highest output is plotted against the horizontal axis (the confidence level axis).

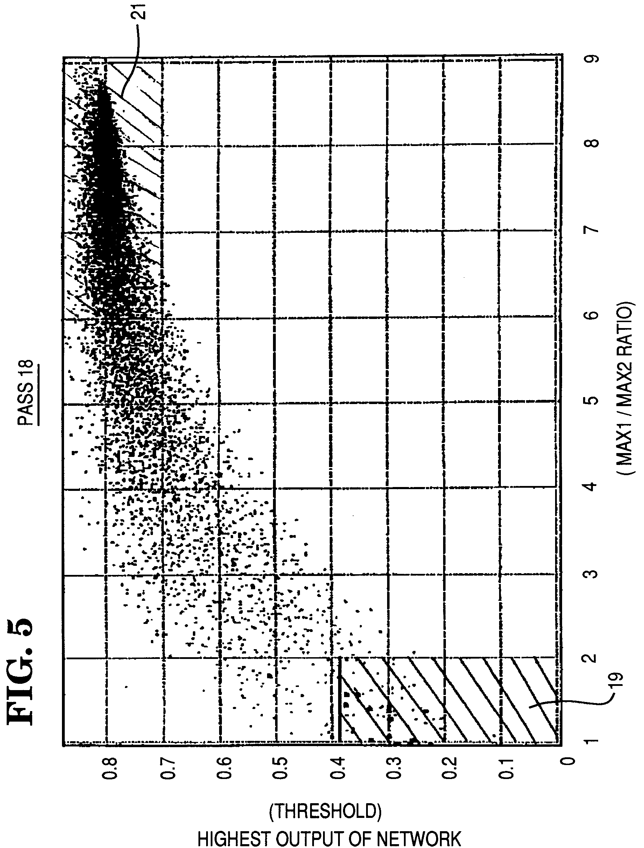

When there is substantial likelihood that certain of the input data may have been misread (evidenced by a low output level and a low ratio (confidence level) value, corresponding for example to the output values or dots in the region below an output of 3.8 and less than a ratio value of 2, as shown in Figure 5), the misreads are converted to rejects.

Low threshold and low ratio values (such as those shown in area 19 of Figure 5) indicate a weak or low confidence level (i.e., weak or low confidence in the accuracy of the output value representing the input data pattern). A strong or high confidence level (i.e., high confidence in the accuracy of the output value representing the input data pattern) is shown by area 21.

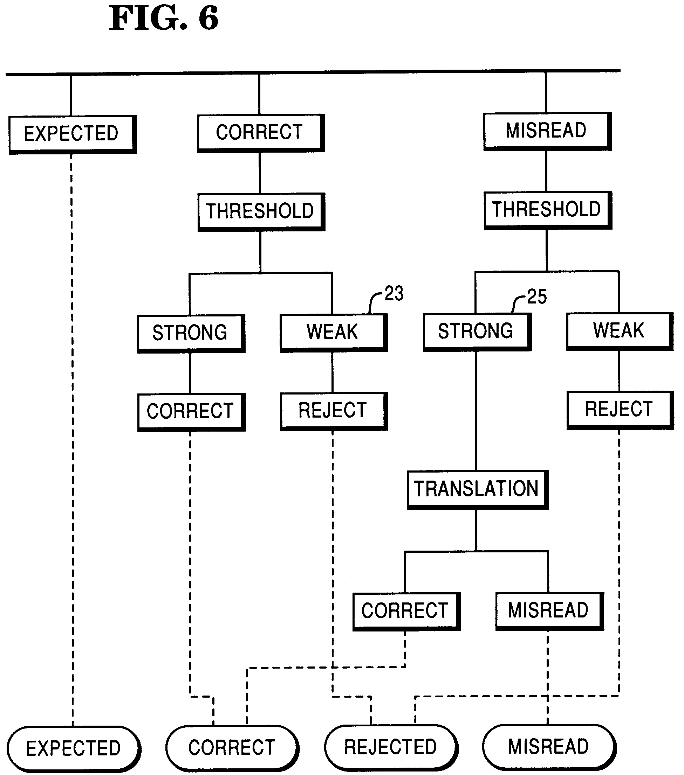

Figure 6 shows an application of the ratio value (confidence level). Where the confidence level is low or weak (as shown by block 23), all seemingly correctly-read (classified) input data are rejected and, where the confidence level is high or strong (as shown by block 25), all seemingly misread input data are corrected (translated).

## Claims

1. A system for determining a confidence level for a plurality of neural network output data values, characterized by: memory means (13,15), including a stored program, for storing the neural network output data values and processing means (17) coupled to said memory means (13,15), for determining, under control of the stored program, the highest neural network output data value, the next highest neural network output data value, and the ratio of said highest neural network output data value to said next highest neural network output data value, said ratio representing a confidence level for classification of the neural network output data values, and for applying said ratio to neural network output data values for rejecting or accepting said data values as correct, thereby reducing errors in rejection of correct data values and in acceptance of incorrect data values.

2. A method of determining a confidence level for a plurality of neural network output data values, characterized by the steps of: storing the neural network output data values in a memory (13,15); determining the highest of the neural network output data values; determining the next highest of the neural network output data values; determining a ratio of the highest neural network output data value to the next highest neural network output data value, the ratio representing a confidence level for classification of the neural network output data values; and applying the ratio to neural network output data values for rejecting or accepting said data values as correct, thereby reducing errors in rejection of correct data values and in acceptance of incorrect data values.
